# EUROPEAN PATENT SPECIFICATION

(11) **EP 2 573 450 B1**
(45) Date of publication and mention of the grant of the patent: **10.12.2014**
(21) Application number: 11184488.2
(22) Date of filing: 10.10.2011
(51) Int. Cl.: B64F 1/20, F21V 7/04, F21Y 101/02, F21W 111/06

(54) **Airport and heliport lighting system**
Flughafen- und Hubschrauberlandeplatzbeleuchtungssystem
Aéroport et système d'éclairage d'héliports

(30) Priority: 23.09.2011 EP 11182645
(43) Date of publication of application: 27.03.2013
(73) Proprietor: Hella KGaA Hueck & Co, 59552 Lippstadt (DE); Induperm A/S, 4800 Nykøbing Falster (DK)
(72) Inventor: Lund-Hermansen, Ole, 4800 Nykøbing Falster (DK)
(74) Representative: Lohr, Georg

(56) References cited:
- WO-A1-2008/050783
- WO-A1-2010/009491
- FR-A1- 2 849 388
- US-A1- 2010 264 800
- US-A1- 2011 013 413
- US-A1- 2011 234 078

## Description

### Field of the invention

The invention relates to an airport and heliport lighting system. Such lighting systems may be used to mark airport runways and heliport landing pads.

### Description of the related art

LED lighting systems offer significant advantages over traditional incandescent, HID and fluorescent lamps. LEDs are of smaller size, offer higher reliability, longer operational life and lower energy consumption. This is specifically important for airport lighting systems where high reliability and robustness is required. However, there are specific requirements when using LEDs. As increased operating temperature significantly reduces lifetime, cooling is of high importance. Furthermore, most LED chips are approximately isotropic light sources with a lambertian light distribution, which must be adapted to specific requirements of a lighting system.

In the US patent publication US 6,932,496 B2 a LED-based elevated omnidirectional airfield light is disclosed. Light emitted by a centered LED is deflected radially by a mirror. The light intensity of this light is limited by the capability of a single LED.

The international patent application WO 97/29320 discloses a LED based flight obstacle light. Light is emitted by a plurality of LEDs radially arranged around disk shaped printed circuit boards. Due to the higher number of LEDs light the total luminance may be enhanced. The drawback is the low heat transfer capability of the printed circuit boards. Due to the low heat transfer capability the maximum luminance is low.

### Summary of the invention

The problem to be solved by the invention is to provide a LED based heliport or airport lighting system with enhanced luminance, reliability and lifetime, the solution should be inexpensive and suitable for manufacturing in large volumes.

Solutions of the problem are described by the independent claim. The dependent claims relate to further improvements of the invention.

According to the invention a lighting system comprises at least one lighting module which has a body with a conical section. Preferably the conical section is concentrical to a main axis. At least one LED, preferably a plurality of LEDs is located at the conical section pointing outward of the conical section. Preferably there are three or more LEDs at the conical section. Most preferably there are 4 to 6 LEDs at the conical section. The LEDs have connecting leads which are contacted by a printed circuit board. This printed circuit board may hold further electronic components like integrated circuits, discrete semiconductors like transistors or diodes, psasive components like capacitors or resistors, mechanical components like connectors or optical components like mirrors or lenses. Preferably there is at least one LED driver on the printed circuit board. It is further preferred, if the body of the lighting module is made of thermally conductive material, which may act as a heat sink and therefore remove the heat from the LEDs. It further may act as an electromagnetic shield. Most preferably the body is made of metal like aluminum and configured as heat sink for the LEDs. This allows for dissipation of larger amounts of thermal energy compared to the prior art, permitting a higher LED current, yielding a higher luminance, longer lifetime and higher reliability. It is further preferred, if the body has at least a partially reflecting surface to reflect light from the LEDs outwards of the body. To obtain a precise optical alignment and a good thermal contact between the individual LEDs and the body, the LEDs are glued or cemented to the body. They also may be held by a clamp or screw or any other holding device. There may also be recesses for the LEDs in the body.

It is further preferred, if there is a mirror concentric to the conical shaped section. Preferably the mirror is held by the printed circuit board. It is further preferred, if the mirror is a dome shaped. It may be supported by a cylinder. The mirror may be of metal with a reflecting surface. Alternatively the mirror may be a plastic part with reflecting surface. It may also be made of glass. For the case, the LEDs are at the inner side of the conical section, it is preferred, if the mirror is within the conical section. For the case, the LEDs are at the output side of the conical section, it is preferred, if the mirror is outside of the conical section. In this case it preferably surrounds the conical section.

In a further embodiment at least a part of the conical section consists of a plurality of polygon shaped planes, i.e. the conical form is at least partially approximated by the polygon shaped planes. Preferably there is one LED at each polygon shaped plane

The invention comprises a LED based heliport or airport lighting lamp having at least one lighting module within a case.

### Description of Drawings

In the following the invention will be described by way of example, without limitation of the general inventive concept, on examples of embodiment with reference to the drawings.
- Figure 1: shows a first embodiment of a lighting module.
- Figure 2: shows a top view of the first embodiment.
- Figure 3: shows a second embodiment of a lighting module.
- Figure 4: shows a top view of the second embodiment.
- Figure 5: shows a modification of the first embodiment with polygon shaped planes.
- Figure 6: shows a modification of the second embodiment with polygon shaped planes.
- Figure 7: shows a LED based heliport or airport lighting system.

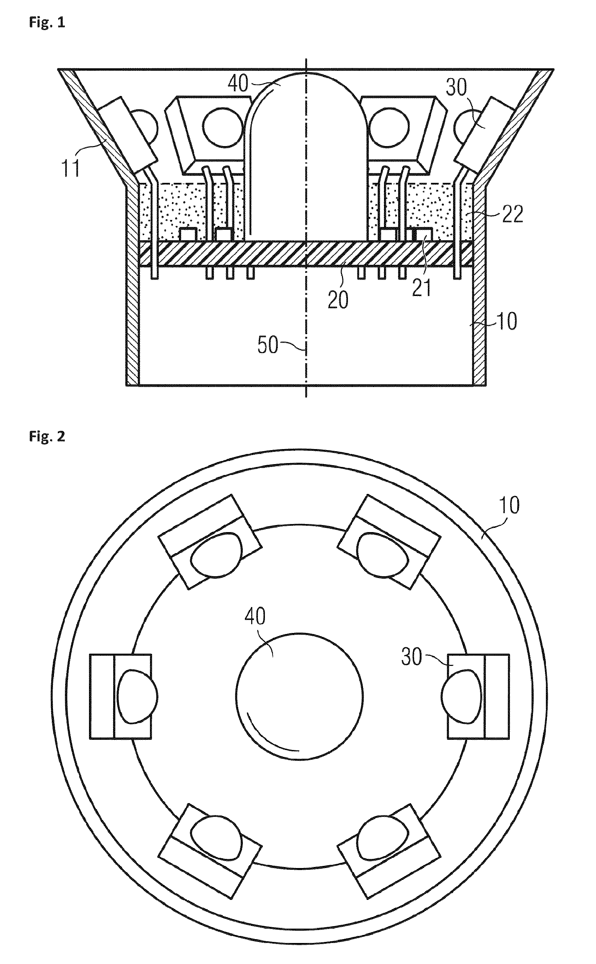

A first embodiment of a lighting module is shown in figures 1 and 2. It has a body 10 with a conical section 11, both being concentrical to a main axis 50. A plurality of LEDs 30 are located on the conical section. Preferably they are glued to the conical section. The connecting leads of the LEDs (wires) are contacted by a printed circuit board 20. For this purpose the connecting leads are preferably inserted through holes, preferably through holes, of the printed circuit board. It is further preferred if the leads are soldered to the printed circuit board. The printed circuit board 20 may hold further electronic components 21. There may also be a connector for connecting a cable at the printed circuit board. The printed circuit board may have any form, e.g it may be circular or polygon shaped. But it is preferred, if the printed circuit board is adapted to the contour of the body. To protect the electronic components and to fix and to stabilize the printed circuit board a potting compound 22 is provided. The top side and/or the bottom side of the printed circuit board 20 may be potted. The LEDs may also be fixed by the potting compound to the body. This may be an alternative to gluing. Here it is important, not to cover any optical surface like a lens of the LEDs. Furthermore a reflector 40 or mirror is mounted on the printed circuit board for directing parts of the LED's light basically into the direction of main axis 50. The optical radiation of this embodiment roughly covers a hemisphere above the lighting module.

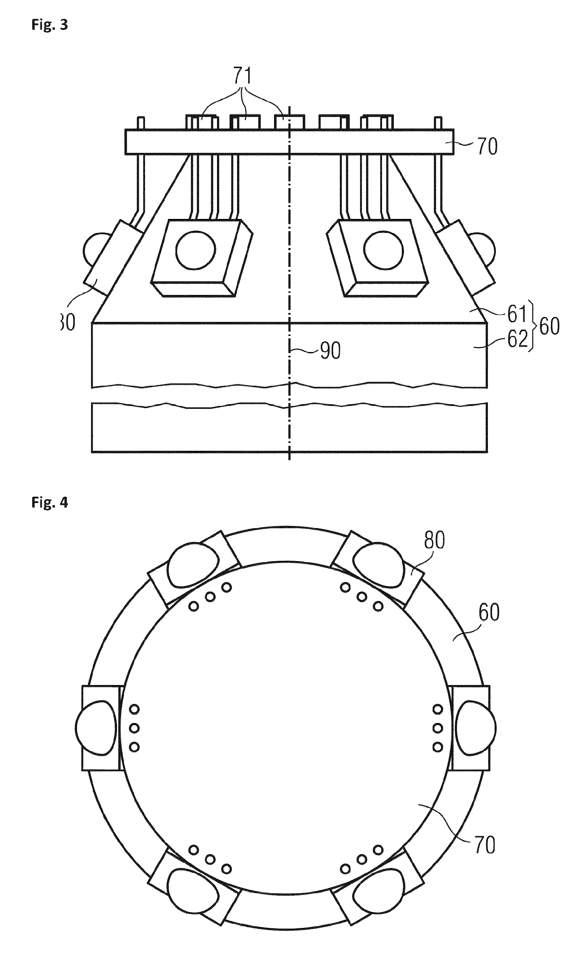

A second embodiment of the lighting module is shown in figures 3 and 4. It is basically the same as the previous embodiment. The main difference is that the LEDs 80 are mounted to the outside of a conical section 61 of a body 60. It is preferred, if the conical section 61 and a cylindrical section 62 are concentric to the main axis 90. The connecting leads of the LEDs 80 are connected by a printed circuit board 70 which may also hold further electronic components 71. The printed circuit board 70 may also be potted as described above. The light beam emitted by this embodiment approximately has a cylinder shape.

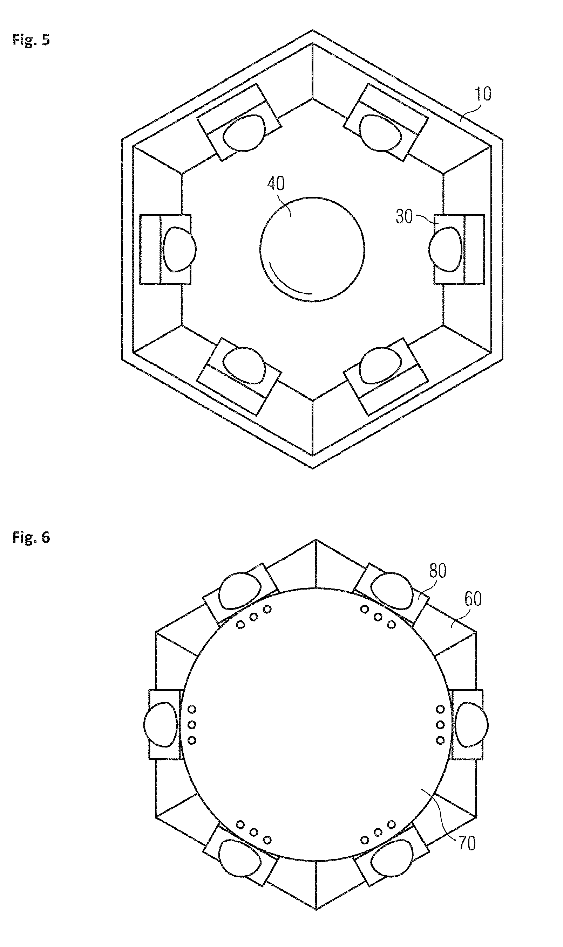

Figure 5 shows a modification of the first embodiment. Here the conical section of the body 10 is approximated by a plurality of polygon shaped planes 13.

In figure 6 a modification of the second embodiment is shown. Here the conical section of the body 60 is approximated a plurality of polygon shaped planes 63.

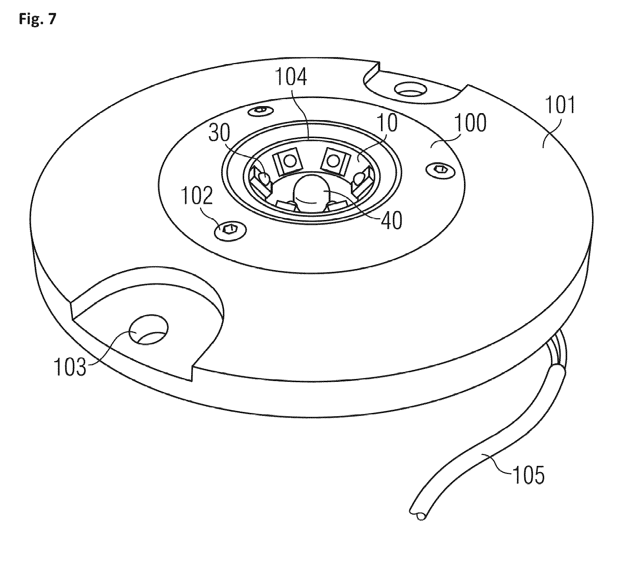

Figure 7 shows a LED based heliport or airport lighting system having a main body 101 holding lighting module 100. The lighting module 100 is fixed by lighting module screw 102 to the main body. The main body may be fixed to some mounting surface or the underground or a further container or housing by means of screws inserted through screw holes 103. The lighting module 100 is covered and protected by an optical clear, preferably glass cover 104 which preferably is sealed by rubber seals. Electrical connection is made by a connecting cable 105. Due to the close mechanical contact between the main body 101 and the lighting module 100 there is also a good thermal contact transferring heat from the LEDs to the large surface of the main body 101 and thereby the LEDs are cooled.

### List of reference numerals

- 10: body of lighting module
- 11: conical section of body
- 13: polygon plane
- 20: printed circuit board
- 21: electronic components
- 22: potting compound
- 30: LED
- 40: reflector
- 50: main axis
- 60: body of lighting module
- 61: conical section of body
- 62: cylindrical section of body
- 63: polygon plane
- 70: printed circuit board
- 71: electronic components
- 80: LED
- 90: main axis
- 100: lighting module
- 101: main body
- 102: lighting module screw
- 103: main body screw hole
- 104: glass cover
- 105: cable

## Claims

1. An airport and heliport lighting system comprising a lighting module (100) comprising
a body (10, 60) with a conical section (11, 61), concentrical to a main axis (50, 90),
a plurality of LEDs (30, 80)
and a printed circuit board (20, 70), essentially at a right angle to the main axis (50, 90),
**characterized in, that**
the plurality of LEDs (30, 80) is located inside the conical section (11, 61) pointing towards the main axis (50, 90) and
the printed circuit board (20, 70) contacts each of the plurality of LED's connecting leads.

2. The lighting system according to claim 1,
**characterized in, that**
the body (10, 60) comprises metal.

3. The lighting system according to claim 2,
**characterized in, that**
the body (10, 60) comprises aluminum.

4. The lighting system according to any one of the preceding claims,
**characterized in, that**
the conical section (11, 61) of the body has a reflecting surface between the LEDs (30, 80).

5. The lighting system according to any one of the preceding claims,
**characterized in, that**
the conical section (11) of the body surrounds a mirror (40).

6. The lighting system according to claim 5,
**characterized in, that**
the mirror (40) has a hemispherical part located at one end of a cylinder.

7. The lighting system according to claim 5 or 6,
**characterized in, that**
the mirror (40) is mounted on the printed circuit board (20).

8. The lighting system according to any one of the preceding claims,
**characterized in, that**
the printed circuit board (20, 70) is potted by a potting compound (22).

9. The lighting system according to any one of the preceding claims,
**characterized in, that**
the conical section (11) has a plurality of polygon shaped planes (13, 63).

10. The lighting system according to any one of the preceding claims,
**characterized in, that**
the lighting system further comprises a main body (101).

## Patentansprüche

1. Ein Flughafen- und Hubschrauberlandeplatz-Beleuchtungssystem, umfassend ein Beleuchtungsmodul (100) umfassend:
einen Körper (10, 60) mit einem konischen Abschnitt (11, 61), der konzentrisch zu einer Hauptachse (50, 90) ist;
eine Vielzahl von LEDs (30, 80);
und eine Leiterplatte (20, 70), im Wesentlichen in einem rechten Winkel zu der Hauptachse (50, 90),
**dadurch gekennzeichnet, dass**
die Vielzahl der LEDs (30, 80) an der Innenseite des konischen Abschnitts (11, 61) angeordnet ist, in Richtung der Hauptachse (50, 90) weisend, und
die Leiterplatte (20, 70) jede der Anschlüsse der Vielzahl von LEDs kontaktiert.

2. Das Beleuchtungssystem nach Anspruch 1,
**dadurch gekennzeichnet, dass**
der Körper (10, 60) Metall umfasst.

3. Das Beleuchtungssystem nach Anspruch 2,
**dadurch gekennzeichnet, dass**
der Körper (10, 60) Aluminium umfasst.

4. Das Beleuchtungssystem nach einem der vorhergehenden Ansprüche,
**dadurch gekennzeichnet, dass**
der konische Abschnitt (11, 61) des Körpers eine reflektierende Oberfläche zwischen den LEDs (30, 80) hat.

5. Das Beleuchtungssystem nach einem der vorhergehenden Ansprüche,
**dadurch gekennzeichnet, dass**
der konische Abschnitt (11) des Körpers einen Spiegel (40) umgibt.

6. Das Beleuchtungssystem nach Anspruch 5,
**dadurch gekennzeichnet, dass**
der Spiegel (40) einen halbkugelförmigen Teil hat, der an einem Ende eines Zylinders angeordnet ist.

7. Das Beleuchtungssystem nach Anspruch 5 oder 6,
**dadurch gekennzeichnet, dass**
der Spiegel (40) auf der Leiterplatte (20) montiert ist.

8. Das Beleuchtungssystem nach einem der vorhergehenden Ansprüche,
**dadurch gekennzeichnet, dass**
die Leiterplatte (20, 70) durch eine Vergussmasse (22) vergossen ist.

9. Das Beleuchtungssystem nach einem der vorhergehenden Ansprüche,
**dadurch gekennzeichnet, dass**
der der konische Abschnitt (11) eine Vielzahl von polygonförmigen Ebenen (13, 63) hat.

10. Das Beleuchtungssystem nach einem der vorhergehenden Ansprüche,
**dadurch gekennzeichnet, dass**
das Beleuchtungssystem weiterhin einen Hauptkörper (101) umfasst.

## Revendications

1. Un système d'éclairage d'héliport et d'aéroport comprenant un module d'éclairage (100) comprenant
un corps (10, 60) avec une section conique (11, 61), concentrique par rapport à un axe principal (50, 90),
une pluralité de DEL (30, 80)
et une carte de circuit imprimé (20, 70), principalement à un angle droit par rapport à l'axe principal (50, 90),
**caractérisé en ce que**
la pluralité des DEL (30, 80) se trouve à l'intérieur de la section conique (11, 61) pointant vers l'axe principal (50, 90) et
la carte de circuit imprimé (20, 70) contacte chacune des pluralité des câbles de connexion des DEL.

2. Le système d'éclairage selon la revendication 1,
**Caractérisé en ce que**
Le corps (10, 60) comprend du métal.

3. Le système d'éclairage selon la revendication 2,
**Caractérisé en ce que**
Le corps (10, 60) comprend de l'aluminium.

4. Le système d'éclairage selon l'une des revendications précédentes,
**Caractérisé en ce que**
La section conique (11, 61) du corps a une surface de réflexion entre les DEL (30, 80).

5. Le système d'éclairage selon l'une des revendications précédentes,
**Caractérisé en ce que**
La section conique (11) du corps entoure un miroir (40).

6. Le système d'éclairage selon la revendication 5,
**Caractérisé en ce que**
Le miroir (40) possède une partie hémisphérique située à une extrémité d'un cylindre.

7. Le système d'éclairage selon les revendications 5 ou 6,
**Caractérisé en ce que**
Le miroir (40) est monté sur la carte de circuit imprimé (20).

8. Le système d'éclairage selon l'une des revendications précédentes, **caractérisé en ce que** La carte de circuit imprimé (20, 70) est imprégnée par une pâte de remplissage (22).

9. Le système d'éclairage selon l'une des revendications précédentes,
**Caractérisé en ce que**
La section conique (11) possède une pluralité de plans en forme de polygone (13, 63).

10. Le système d'éclairage selon l'une des revendications précédentes,
**Caractérisé en ce que**
Le système d'éclairage comprend de plus un corps principal (101).
